(19) **Europäisches Patentamt / European Patent Office / Office européen des brevets**

(11) **EP 4 635 911 A1**

(12) **EUROPEAN PATENT APPLICATION**
published in accordance with Art. 153(4) EPC

(43) Date of publication:
**22.10.2025 Bulletin 2025/43**

(21) Application number: **23903993.6**

(22) Date of filing: **13.12.2023**

(51) International Patent Classification (IPC):
***C01B 17/22*** (2006.01)

(52) Cooperative Patent Classification (CPC):
**C01B 17/22; Y02E 60/10**

(86) International application number:
**PCT/KR2023/020536**

(87) International publication number:
**WO 2024/128792 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 KR 20220177583**

(71) Applicants:
- **POSCO Holdings Inc.**
  **Pohang-si, Gyeongsangbuk-do 37859 (KR)**
- **RESEARCH INSTITUTE OF INDUSTRIAL SCIENCE & TECHNOLOGY**
  **Pohang-si, Gyeongsangbuk-do 37673 (KR)**

(72) Inventors:
- **LEE, Sihwa**
  **Seoul 07542 (KR)**
- **LEE, Ji Heon**
  **Pohang-si, Gyeongsangbuk-do 37673 (KR)**
- **SON, Young Geun**
  **Pohang-si, Gyeongsangbuk-do 37669 (KR)**
- **KIM, Byoung Ju**
  **Gyeongsangbuk-do 37671 (KR)**
- **PARK, Jung Kwan**
  **Pohang-si, Gyeongsangbuk-do 37566 (KR)**
- **SEO, Han Seok**
  **Pohang-si, Gyeongsangbuk-do 37835 (KR)**
- **KO, Young-Seon**
  **Gyeongsangbuk-do 37837 (KR)**

(74) Representative: **Pfenning, Meinig & Partner mbB**
**Patent- und Rechtsanwälte**
**Theresienhöhe 11a**
**80339 München (DE)**

(54) **METHOD FOR PREPARING LITHIUM SULFIDE**

(57) The present invention relates to a method for producing lithium sulfide, the method comprising: mixing a carbon material and a lithium compound to prepare a lithium-carbon compound; filtering a solution obtained by mixing the lithium-carbon compound with a solvent; spray-drying the filtrate in an inert loop structure at a temperature ranging from 110°C to 160°C; and heat-treating the spray-dried product, whereby lithium sulfide having an oxygen content of less than 2.8% can be produced.

EP 4 635 911 A1

【Fig. 1a】

【Fig. 1b】

**Description**

## FIELD OF THE INVENTION

The present invention relates to an all-solid-state electrolyte, and more particularly, to a method for preparing lithium sulfide for use in an all-solid-state electrolyte.

## (B) DESCRIPTION OF THE RELATED ART

Rechargeable batteries are widely used in a variety of applications, ranging from small electronic devices such as mobile phones and notebook computers to large-scale systems such as electric vehicles (EVs) and energy storage systems (ESSs). As the scope of rechargeable battery applications expands across all areas of daily life, there is a growing demand not only for high energy density and long cycle life, but also for improved safety.

Conventional lithium secondary batteries typically employ liquid electrolytes based on organic solvents. However, these liquid electrolytes pose risks such as leakage or fire, thereby necessitating strict packaging. Such packaging requirements have limited the extent to which energy density can be increased. Consequently, the need has emerged for all-solid-state batteries that use inorganic solid electrolytes instead of organic liquid electrolytes.

All-solid-state batteries offer improved safety by eliminating organic solvents typically used in liquid electrolytes. In addition, inorganic solid electrolytes provide chemical stability across a wide voltage range, enabling the use of high-voltage electrode materials.

Solid electrolytes can be broadly categorized into oxide-based and sulfide-based types. Sulfide-based solid electrolytes are known to exhibit higher ionic conductivity compared to oxide-based electrolytes. Lithium sulfide ($Li_2S$) is a key raw material used in sulfide-based solid electrolytes. Methods for synthesizing $Li_2S$ include high-energy ball milling, wet plasma processing, and wet/dry methods using lithium metal. However, these approaches face limitations such as poor kinetic control, reliance on expensive raw materials, high processing costs, and environmental concerns, making them unsuitable for large-scale commercialization.

In contrast, the carbonthermal reduction method offers an environmentally friendly alternative by avoiding the use of toxic hydrogen sulfide ($H_2S$) gas and allowing the use of low-cost lithium sulfate ($Li_2SO_4$). However, since a solid-phase reduction reaction is followed by an extraction step involving solvent use, challenges remain in managing the physical properties of the extraction solution, as well as in the subsequent drying, heat treatment, or crystallization processes to ensure product purity.

In particular, the drying method for the extraction solution critically affects the properties of the resulting dried material, making it a key factor in obtaining high-purity lithium sulfide. Therefore, there is a need for a method of synthesizing lithium sulfide by precisely controlling the drying process of the lithium sulfide-containing extraction solution.

## TECHNICAL PROBLEM

The technical problem to be solved by the present invention is to provide a drying method for producing high-purity lithium sulfide.

## TECHNICAL SOLUTION

In one embodiment of the present invention, a method for preparing lithium sulfide comprises: mixing a carbon-based material and a lithium compound to prepare a lithium-carbon composite; filtering a solution obtained by mixing the lithium-carbon composite with a solvent; spray-drying the filtrate at a temperature in the range of 110°C to 160°C under an inert loop structure; and heat-treating the resulting spray-dried powder, thereby producing lithium sulfide having an oxygen content of less than 2.8%.

In one embodiment, the step of spray-drying the filtrate at a temperature in the range of 110°C to 160°C under the inert loop structure may further include controlling the average particle size of the spray-dried powder to be from 0.1 to 100 μm.

In one embodiment, the step of spray-drying the filtrate at a temperature in the range of 110°C to 160°C under the inert loop structure may include controlling the concentration of the extracted solution being spray-dried to be from 5 to 15 g/L.

In one embodiment, the step of spray-drying the filtrate at a temperature in the range of 110°C to 160°C under the inert loop structure may include shaping the spray-dried powder into a spherical form.

In one embodiment, in the step of filtering a solution in which the lithium-carbon compound and the solvent are mixed, the mixing ratio of the solvent to the lithium-carbon compound may be from 1 to 1/4.

In one embodiment, the step of heat-treating the spray-dried powder may be performed at a temperature ranging from 100°C to 800°C.

In one embodiment, hydrogen sulfide ($H_2S$), propane ($C_3H_8$), or methane ($CH_4$) may be generated during the step of heat-treating the spray-dried powder.

In one embodiment, during the step of spray-drying the filtrate at a temperature range of 110°C to 160°C in an inert loop structure, a portion of the gas generated during drying and the inert gas may be recirculated and undergo re-reaction.

In one embodiment, during the step of spray-drying the filtrate at a temperature range of 110°C to 160°C in an inert loop structure, the inert loop structure may include a partial circulation structure configured to induce a reaction of gases generated from the spray-dried material during the drying process.

In one embodiment, the re-reaction may reduce impurities according to the following reaction equation.

$$[\text{Reaction Equation}] \qquad 2H_2S + 2LiOET \rightarrow Li_2S + 2EtOH$$

In one embodiment, the spray-dried material may include lithium ethoxide (LiOEt, $C_2H_5OLi$), ethanol (EtOH, $C_2H_5OH$), and lithium bisulfide (lithium hydrogen sulfide, LiSH). In one embodiment, the solvent may include at least one selected from the group consisting of ethanol, methanol, isopropyl alcohol, ethylene glycol, and butyl alcohol.

## ADVANTAGEOUS EFFECTS

A method for producing lithium sulfide according to one embodiment of the present invention provides a process for manufacturing high-purity lithium sulfide with reduced impurity content by employing spray drying in combination with a re-reaction carried out within an inert loop structure.

## BRIEF DESCRIPTION OF THE DRAWINGS

FIGS. 1A and 1B show the XRD peak values of lithium sulfide depending on the drying method.

FIGS. 2A to 2C are SEM images at different magnifications ($\times$300, $\times$1K) and a particle size distribution graph for Example 2.

FIGS. 2D to 2G are SEM images at different magnifications ($\times$100, $\times$300, $\times$1K) and a particle size distribution graph for Example 3.

FIG. 3 illustrates the Raman characteristics of the dried powder obtained by the manufacturing method according to one embodiment of the present invention.

FIGS. 4A to 4D show the gas concentrations generated during heat treatment of the spray-dried material according to one embodiment of the present invention.

FIGS. 5A and 5B are schematic diagrams of the reaction process depending on the presence or absence of an inert loop structure during the drying step.

FIGS. 6A and 6B show the XRD peaks of lithium sulfide synthesized through final heat treatment after rapid temperature variation, when the drying temperature was controlled during spraying and drying of the filtrate according to the embodiments and comparative examples of the present invention.

FIGS. 7A and 7B show the XRD peaks obtained after spray drying and heat treatment of a high-concentration filtrate, wherein the filtrate concentration was controlled during spraying and drying according to an embodiment of the present invention.

## DETAILED DESCRIPTION OF THE EMBODIMENTS

The terms such as "first", "second", and "third" may be used to describe various components, elements, regions, layers, and/or sections, but are not limited thereto. These terms are used merely to distinguish one component, element, region, layer, or section from another and do not imply a specific order or hierarchy. Accordingly, a "first" component, element, region, layer, or section described below may be referred to as a "second" one without departing from the scope of the present invention.

The terminology used herein is for the purpose of describing particular embodiments only and is not intended to be limiting of the invention. As used herein, the singular forms "a", "an", and "the" are intended to include the plural forms as well unless the context clearly indicates otherwise. The term "comprising" as used herein specifies the presence of stated features, regions, integers, steps, operations, elements, and/or components, but does not preclude the presence or addition of one or more other features, regions, integers, steps, operations, elements, components, and/or groups thereof.

When a component is referred to as being "on" or "above" another component, it may be directly on or above the other component, or intervening components may be present. In contrast, when a component is referred to as being "directly on" or "immediately above" another component, no intervening components are present.

Unless otherwise defined, all technical and scientific terms used herein have the same meanings as commonly understood by one of ordinary skill in the art to which the present invention pertains. Terms generally used in standard dictionaries should be interpreted as having meanings consistent with those in the context of the relevant technical field and the present disclosure, and are not to be interpreted in an idealized or overly formal sense unless expressly so defined herein.

Unless otherwise specified, the symbol "%" denotes weight percent (wt%), and 1 ppm denotes 0.0001 wt%.

Hereinafter, embodiments of the present invention will be described in detail so that those skilled in the art may easily carry out the invention. However, the present invention is not limited to the embodiments set forth herein and may be embodied in various other forms without departing from the spirit or scope of the invention.

According to one embodiment of the present invention, a precursor for producing lithium sulfide is provided. The precursor has a hollow structure and is a spray-dried material obtained through a spray drying step in the lithium sulfide production process described below.

The hollow structure refers to a form having an internal void, and the precursor for lithium sulfide exhibits such a form. This hollow structure results from ethanol evaporation during the spray drying process. The hollow morphology of the precursor provides an advantage of enabling uniformity between the inner and outer regions of the particle during heat treatment.

In one embodiment, the hollow shape may be hemispherical. The hemispherical shape of the precursor allows for favorable mixing with other additive particles during heat treatment, which is beneficial for controlling physical properties.

The precursor may satisfy the following Equation 1:

$$<\text{Equation 1}>$$

$$(\text{Dmax} - \text{Dmin}) / \text{D50} \leq 15$$

(wherein Dmax, Dmin, and D50 represent the maximum particle size, the minimum particle size, and the particle size at which 50% of the total volume is accumulated, respectively.)

In this specification:

- D0.9 is the particle size at which 90% of the cumulative volume is accumulated,
- D10 is the size at 10% accumulation,
- D50 is the median particle size (50% accumulation),
- D6 and D95 represent accumulation at 6% and 95%, respectively,
- Dmin and Dmax indicate the minimum and maximum particle sizes.

Equation 1 serves as an indicator of particle size distribution uniformity. The value of Equation 1 may be 15 or less, and more preferably, 11.30 or less. Satisfying this condition ensures uniform distribution, thereby enabling uniform reaction during heat treatment and reducing variability in the quality of the resulting lithium sulfide. If the value exceeds this range, the quality variation increases, requiring an additional grinding step, which complicates the process.

In one embodiment, the standard deviation (STD DEV) of the particle size may be 11.0 or less, and more preferably 9.2 or less, providing further particle uniformity and enhancing the consistency of the thermal reaction.

In another embodiment, Dmax may be in the range of 10 to 100 $\mu$m, and more specifically from 12.82 to 66.84 $\mu$m. Dmin may range from 0.1 to 2.5 $\mu$m, and more specifically from 0.12 to 1.24 $\mu$m.

The precursor may exhibit the following Raman peaks:

- a first peak in the range of 2,600 to 3,250 cm$^{-1}$ (EtOH),
- a second peak in the range of 2,500 to 2,600 cm$^{-1}$ (LiSH), and
- a third peak in the range of 850 to 1,500 cm$^{-1}$ (LiOEt).

If the precursor contains only LiOEt, lithium sulfide conversion is incomplete, and undesirable byproducts such as $Li_2CO_3$ or $Li_2SO_4$ may be formed. If the precursor contains only LiSH, the following reaction may occur:

$$\text{LiSH} + \text{LiSH} \rightarrow Li_2S + H_2S\uparrow$$

The release of $H_2S$ leads to sulfur loss, which reduces the $Li_2S$ yield. Therefore, it is advantageous that the precursor simultaneously contains the first, second, and third Raman peaks to avoid sulfur loss and enable the following conversion:

$$LiSH + LiOEt \rightarrow Li_2S + EtOH$$

According to another embodiment of the present invention, a lithium sulfide powder for use in solid-state electrolytes is provided. The powder comprises lithium sulfide ($Li_2S$) and at least one impurity selected from lithium oxide ($Li_2O$), lithium carbonate ($Li_2CO_3$), and lithium sulfate ($Li_2SO_4$). These impurities may result from the thermal treatment process.

In one embodiment, the oxygen content of the powder is less than 2.8 wt%, preferably from 1.3 to 1.6 wt%, and more preferably from 1.32 to 1.60 wt%. If the oxygen content exceeds this range, the lithium ionic conductivity of argyrodite synthesized using $Li_2S$ may degrade. This is also affected by the ratio of impurities such as $Li_2O$, $Li_2CO_3$, $Li_2SO_4$, or LiOH.

In one embodiment, lithium carbonate and lithium sulfate may be absent, and only lithium oxide ($Li_2O$) may be present as the impurity. The content of lithium oxide may be 3.0 wt% or less, preferably 1.6 wt% or less. Satisfying this range allows for the production of high-purity lithium sulfide with reduced impurity content. If this condition is not met, the electrical properties of argyrodite synthesized using such $Li_2S$ are significantly degraded.

In one embodiment, the lithium sulfide powder satisfies the following Equation 2:

<Equation 2>

$$[Li_2O] \times \text{oxygen content} \leq 5.0$$

(wherein [$Li_2O$] refers to the lithium oxide content in the powder)

Equation 2 represents a quality index for high-purity lithium sulfide based on the product of lithium oxide and oxygen content. The value may be 5.0 or less, more preferably 2.5 or less, and even more preferably from 0.64 to 2.11.

If Equation 2 exceeds the defined range, the electrical performance of argyrodite synthesized using such lithium sulfide may deteriorate.

Another embodiment of the present invention provides a method for producing lithium sulfide, the method comprising: preparing a lithium-carbon composite by mixing a carbonaceous material and a lithium compound; filtering a solution obtained by mixing the lithium-carbon composite with a solvent; spray-drying the filtered solution under an inert loop structure; and heat-treating the dried product.

The description of lithium sulfide as used herein may refer to that described in the preceding sections.

In one embodiment, the carbonaceous material may include at least one selected from soft carbon, hard carbon, petroleum-based coke, coal-based needle coke, coal-based pitch coke, natural graphite, and artificial graphite. The lithium compound may include at least one selected from lithium sulfate, lithium hydroxide, lithium oxide, and lithium carbonate. The preparation of the lithium-carbon composite may be performed by heat-treating the mixture of carbonaceous material and lithium compound.

The spray-drying step under the inert loop structure is specifically carried out using a spray-drying method. The filtered solution may be in slurry form, and its concentration may be controlled before spray-drying. This enables the formation of dried powder with uniform particle size.

In one embodiment, the drying step may be conducted at a temperature ranging from 100°C to 160°C, preferably from 110°C to 160°C.

If the upper limit of this range is exceeded, undesired impurities such as lithium carbonate ($Li_2CO_3$) and lithium sulfate ($Li_2SO_4$) may be formed, and the oxygen concentration may increase.

If the lower limit is not met, insufficient drying may result in wet residue accumulation in the spray-drying loop, thereby reducing processability.

The average particle size of the spray-dried powder may be controlled to range from 0.1 to 100 $\mu$m, more preferably from 1.0 to 10.0 $\mu$m.

In one embodiment, if the average particle size exceeds the upper limit, uniform heat transfer during the subsequent heat treatment of the dried powder obtained via spray drying may become problematic. Moreover, increasing the average particle size by raising the concentration of the spray solution or increasing the injection rate may result in clogging of the spray-drying nozzle. Additionally, efforts to prevent clogging, such as implementing cross-spraying, may degrade process stability.

If the average particle size falls below the lower limit, the proportion of fine particles increases, which can lead to rapid clogging of the pre-filter in the aspirator used to circulate powder and solvent during spray drying. Furthermore, during heat treatment, the fine dried powder may be blown away by the inert gas flow in the tube furnace, resulting in material loss.

In one embodiment, during spray drying of the filtered solution at a temperature range of 110°C to 160°C, the lithium concentration of the extract (based on Li-ICP) may be controlled within a range of 5 to 15 g/L, and more specifically from 6 to 14 g/L.

If the lithium concentration exceeds the upper limit, the spray-drying nozzle may become clogged, and process stability may deteriorate due to countermeasures such as cross-spraying.

Conversely, if the lithium concentration falls below the lower limit, the hourly yield decreases and an excessive amount of time is required to obtain a target amount of dried product.

In one embodiment, the spray drying step under the inert loop structure may include controlling the morphology of the spray-dried powder to be spherical. The sphericity may be controlled by adjusting the extract concentration, the flow rate of the inert injection gas, or the feed rate of the extract. Ensuring the powder has a spherical shape promotes uniform heat transfer during the subsequent heat treatment step.

In another embodiment, a portion of the gas generated during drying and the inert gas may be recirculated under the inert loop structure. The drying step may include a partial circulation design to promote reaction between the gas evolved from the spray-dried material and the lithium ethoxide (LiOEt) present in the powder. Specifically, hydrogen sulfide ($H_2S$) generated during drying may participate in the following reaction:

$$2H_2S + 2LiOEt \rightarrow Li_2S + 2EtOH$$

Through this partial recirculation in the inert loop structure, the amount of LiOEt-an impurity precursor-can be reduced, and the oxygen content can be lowered, thereby enabling the production of high-purity lithium sulfide.

In one embodiment, the spray-dried powder may include lithium ethoxide (LiOEt, $C_2H_5O$-Li), ethanol (EtOH, $C_2H_5OH$), and lithium bisulfide (LiSH).

The step of heat-treating the dried powder involves applying heat to the spray-dried powder to obtain final lithium sulfide ($Li_2S$). In one embodiment, the heat treatment may be performed at a temperature of 400°C to 800°C, more preferably from 500°C to 800°C. The heating rate may be controlled to be between 5°C/min and 20°C/min.

In one embodiment, the holding time at the peak temperature during the heat treatment may range from 1 to 6 hours. After the heat treatment, the process may further include a natural cooling step.

If the temperature, heating rate, or holding time exceeds the upper limit, there is a risk that lithium sulfide may be oxidized to lithium oxide.

If these conditions fall below the lower limit, it may be difficult to completely remove impurities such as lithium hydroxide or lithium carbonate, resulting in lower lithium sulfide purity.

In one embodiment, the heat treatment may be performed under an inert gas atmosphere. The inert gas may include at least one selected from helium, neon, krypton, xenon, nitrogen, and argon.

Specific examples of the present invention are described below. However, it should be understood that these examples are merely illustrative of specific embodiments and are not intended to limit the scope of the invention.

## Comparison of $Li_2S$ Depending on Drying Method

<Experimental Example>

A carbothermal reduction process was carried out, wherein lithium sulfate and carbon were mixed and thermally treated under an inert gas atmosphere (Ar) to obtain a lithium sulfide-carbon mixture ($Li_2SO_4 + 2C \rightarrow Li_2S + 2CO_2\uparrow$). The lithium sulfide-carbon mixture was then mixed with ethanol to form an extraction solution. The extraction solution was subsequently dried to obtain a dried solid, which was then heat-treated under an Ar atmosphere to produce lithium sulfide ($Li_2S$). The process was performed in detail as follows.

<Example 1> - Lithium Sulfide Synthesis via Low-Concentration, High-Temperature Spray Drying Method

In the step of controlling the spraying and drying temperature of the filtrate, the extraction solution was adjusted to a low concentration condition (6 g/L, based on Li-ICP) by controlling the mixing ratio of ethanol and the lithium sulfide-containing mixture. The solution was then sprayed and rapidly dried from room temperature to 160 °C. All other procedures were the same as in the Experimental Example.

<Comparative Example 1> - Lithium Sulfide Synthesis via Low-Concentration Vacuum Drying Method

In the step of controlling the spraying and drying temperature of the filtrate, the extraction solution was adjusted to a low concentration condition (6 g/L, based on Li-ICP) by controlling the mixing ratio of ethanol and the lithium sulfide-containing mixture. The mixture was dried by rotary evaporation at a temperature of 45 to 50 °C, under from atmospheric pressure to vacuum applied at 60 mbar. All other procedures were the same as in the Experimental Example.

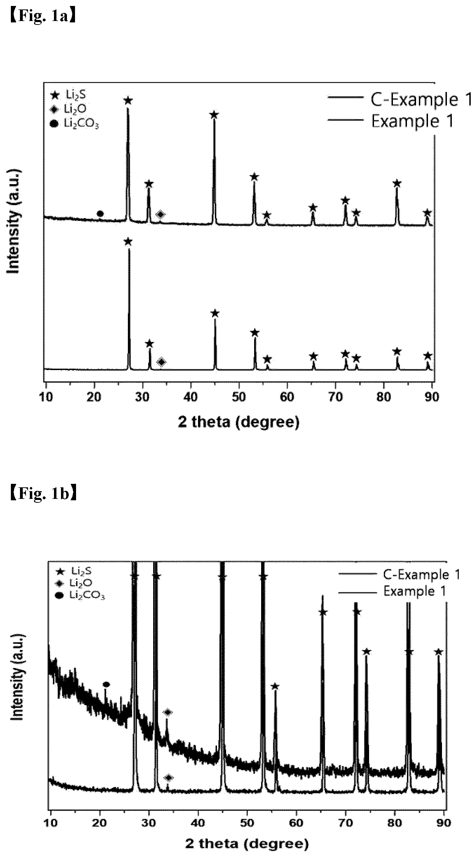

FIGS. 1a and 1b illustrate the XRD peak profiles of lithium sulfide powder depending on the drying method.

**EP 4 635 911 A1**

Specifically, FIGS. 1a and 1b show the XRD peak intensities of lithium sulfide powders obtained in Example 1 and Comparative Example 1. In Comparative Example 1, in addition to lithium sulfide, a diffraction peak corresponding to lithium carbonate ($Li_2CO_3$) was also observed. This confirms that the spray drying method used in Example 1 is superior in terms of $Li_2S$ purity compared to other drying methods.

**Control of Mean Particle Size According to Extraction Solution Concentration**

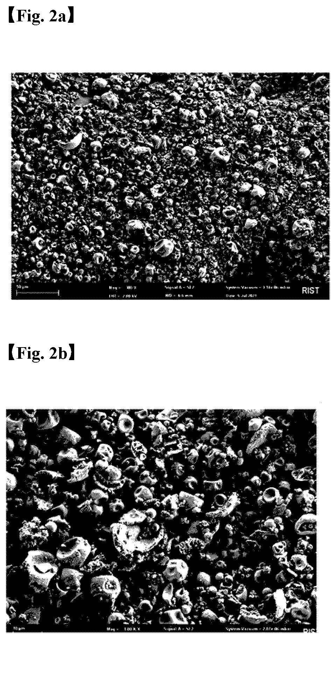

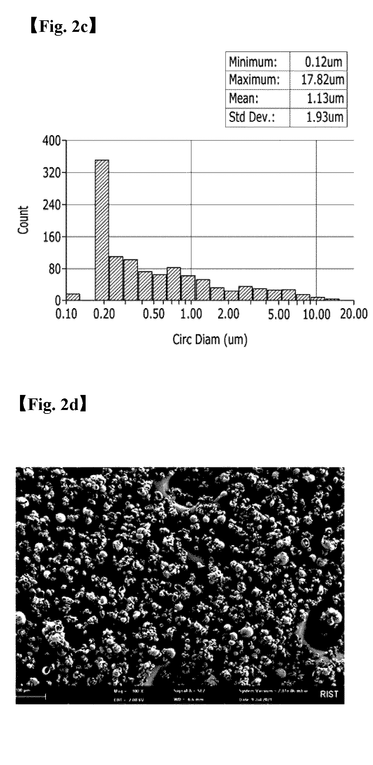

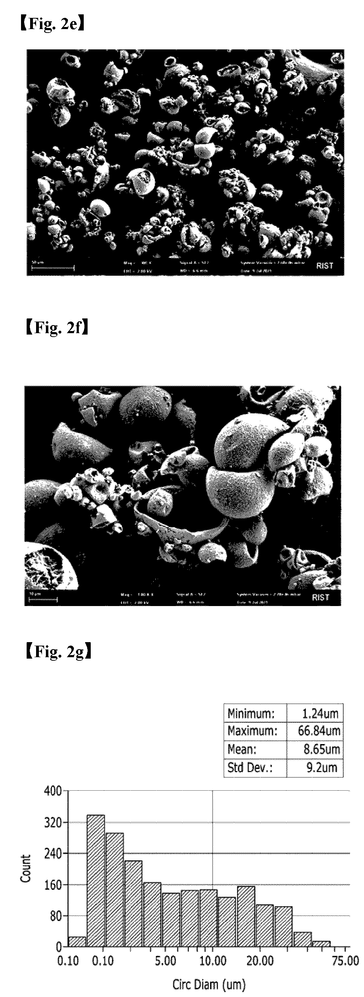

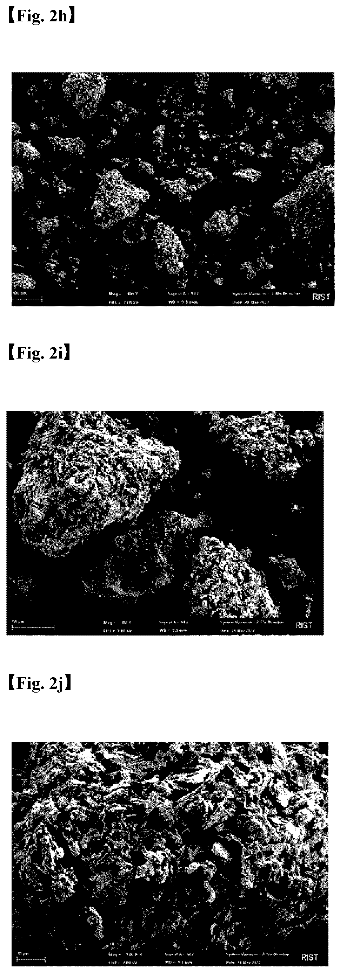

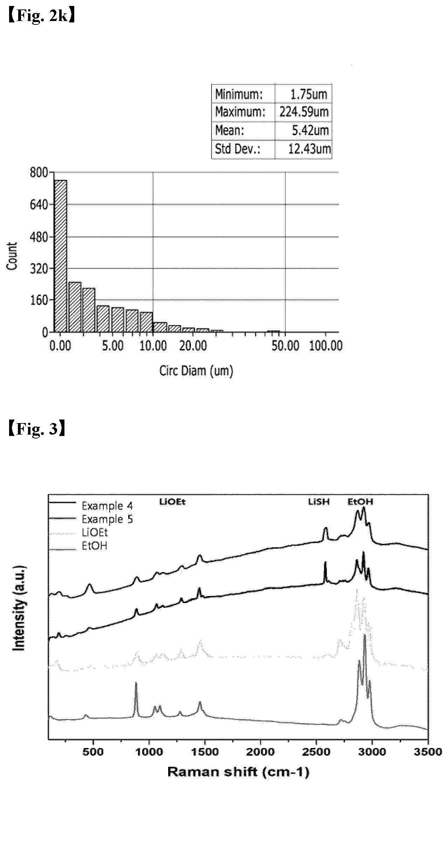

FIGS. 2a to 2g present SEM images and particle size distribution graphs illustrating the effect of extraction solution concentration on the mean particle size of spray-dried powders. FIGS. 2f to 2k provide SEM images and particle size distribution graphs of powders dried using the vacuum drying method.
FIGS. 2a to 2c: SEM images at different magnifications (×300, ×1K) and particle size distribution graph of Example 2.
FIGS. 2d to 2g: SEM images at different magnifications (×100, ×300, ×1K) and particle size distribution graph of Example 3.
FIGS. 2f to 2k: SEM images at different magnifications (×100, ×300, ×1K) and particle size distribution graph of Comparative Example 2, prepared by vacuum drying.

<Example 2> - Low-Concentration Spray-Dried Powder

Using the same spray drying conditions as in Example 1, the concentration of the extraction solution was controlled to a low level (6 g/L). The resulting dried powder exhibited a mean particle size of 1.13 μm.

<Example 3> - High-Concentration Spray-Dried Powder

Also following the spray drying conditions of Example 1, but with the extraction solution concentration adjusted to a higher level (10 g/L), the resulting dried powder had a mean particle size of 8.65 μm.

<Comparative Example 2> - Low-Concentration Vacuum-Dried Powder

As in Comparative Example 1, vacuum drying was performed. The resulting powder exhibited a broad particle size distribution ranging from 1.75 μm to 224.59 μm, confirming that the particle morphology was non-uniform.
Table 1 below provides particle size distribution data for the examples and comparative examples according to the present invention.

[Table 1]

|  | Particle size distribution | | | | |
|---|---|---|---|---|---|
|  | Dmax [μm] | Dmin [μm] | D50 [μm] | STD DEV (Standard deviation) | (Dmax-Dmin)/D50 |
| Ex. 2 | 12.82 | 0.12 | 1.13 | 1.93 | 11.24 |
| Ex. 3 | 66.84 | 1.24 | 8.65 | 9.2 | 7.58 |
| C-Ex. 2 | 224.59 | 1.75 | 5.342 | 12.43 | 41.71 |

As shown in Table 1, it was confirmed through Examples 2 and 3 that the spray-dried precursor for lithium sulfide according to the present invention exhibits a low standard deviation and a low (Dmax-Dmin)/D50 value, thereby having a uniform particle size distribution.

**Raman Spectroscopy Analysis of Spray-Dried Materials**

FIG. 3 illustrates the Raman characteristics of lithium sulfide powder produced according to the method of Example 4 and Example 5 of the present invention. Specifically, the analysis of the spray-dried materials revealed Raman peaks corresponding to lithium ethoxide (LiOEt, $C_2H_5O$-Li), ethanol (EtOH, $C_2H_5O$-H), and lithium bisulfide (LiSH).

<Example 4> - Low-concentration, high-temperature spray-dried material

In this example, the filtrate was sprayed under a low-concentration condition (6 g/L, based on Li-ICP), and rapid drying was conducted from room temperature up to 150 °C.

8

<Example 5> - Low-concentration, low-temperature spray-dried material

Similarly, under a low-concentration condition (6 g/L, based on Li-ICP), the filtrate was rapidly dried from room temperature up to 115 °C.

**Exhaust Gas Characteristics During Heat Treatment With and Without Inert Loop**

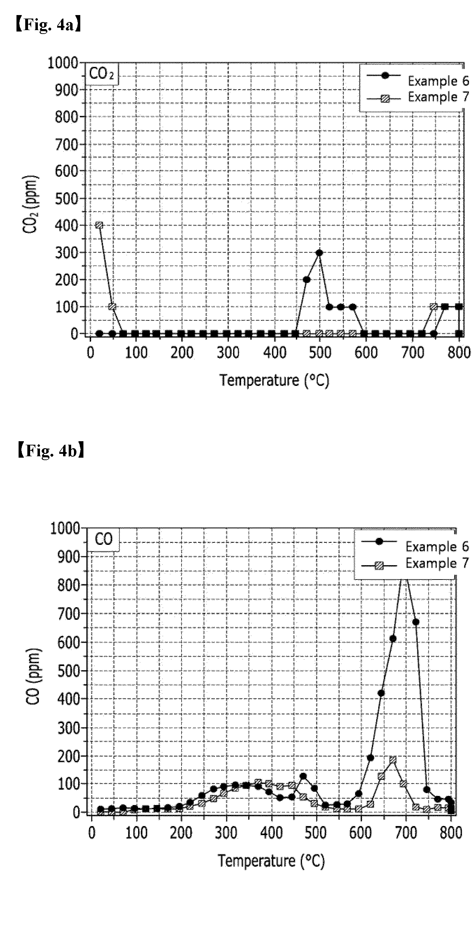

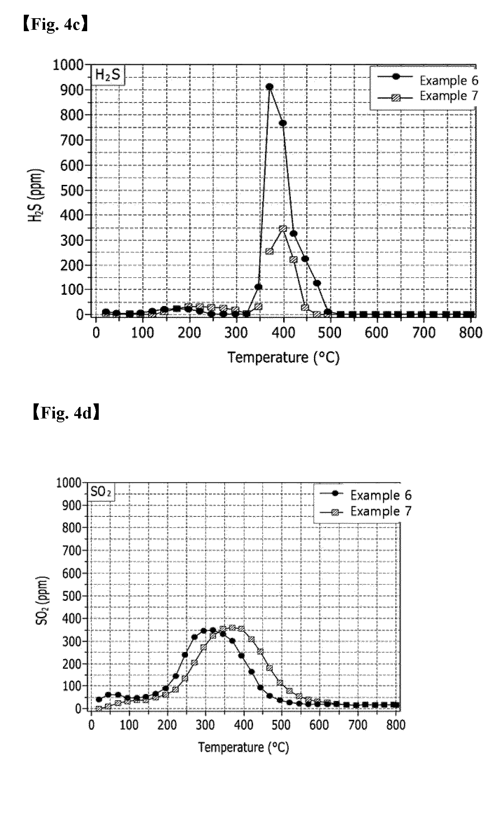

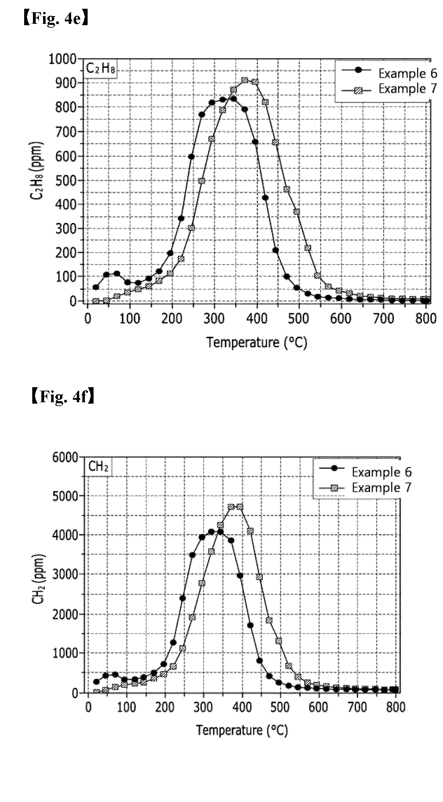

FIGS. 4a to 4d show the concentration of gases generated during heat treatment of spray-dried material according to one embodiment of the present invention.

FIGS. 4a to 4c specifically present the concentrations of $C_3H_8$, $CH_4$, and $H_2S$ gases, respectively, as observed during the heat treatment process in Example 6 and Comparative Example 3.

It was confirmed that these gases are generated when the spray-dried material is heat-treated at 800 °C.

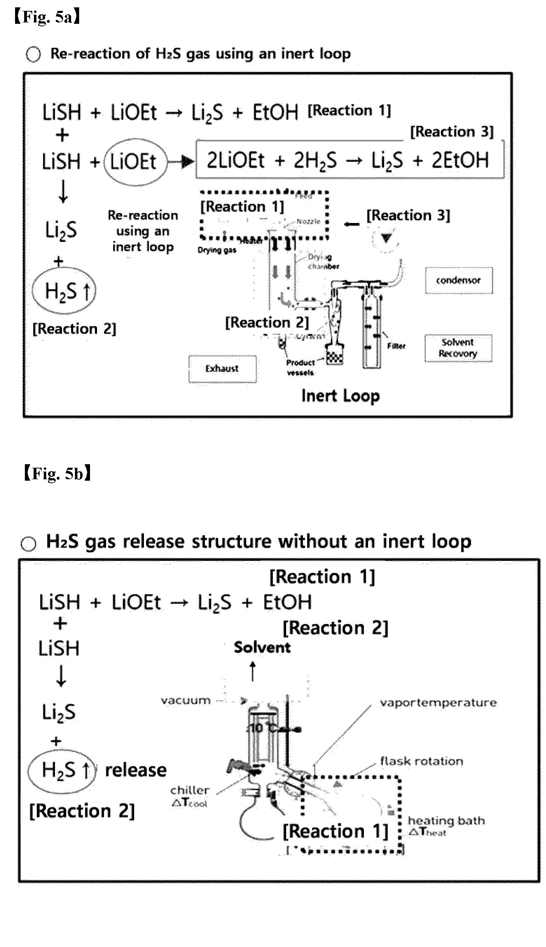

FIGS. 5a and 5b schematically illustrate the reaction process depending on the presence or absence of an inert loop structure during the drying stage. As shown in FIGS. 5a and 5b, in the presence of an inert loop structure, a portion of the gas generated during drying and the inert gas is recirculated. This configuration promotes sufficient reaction between the $H_2S$ gas generated from the spray-dried material and the LiOEt in the dried material.

The participation of $H_2S$ gas in the following secondary reaction reduces the amount of LiOEt, which is a precursor to impurity formation, thereby lowering the impurity content and oxygen concentration.

This effect can be corroborated by the XRD comparison in Table 1, which reflects the differences in drying method.

$$[\text{Reaction Equation}] \qquad 2H_2S + 2LiOEt \rightarrow Li_2S + 2EtOH$$

<Example 6> - Low-Concentration, Low-Temperature Spray-Dried Material

In the same manner as Example 1, a low-concentration solution (6 g/L based on Li-ICP) was prepared by adjusting the ratio of ethanol to the lithium sulfide mixture. The filtrate was sprayed and rapidly dried from room temperature to 160 °C.

<Comparative Example 3> - Low-Concentration, Vacuum-Dried Material

In accordance with Comparative Example 1, a vacuum drying process was performed. The ratio of ethanol to the lithium sulfide mixture was adjusted to achieve a low concentration (6 g/L based on Li-ICP), and the drying was conducted by rotary evaporation at an atmospheric pressure reduced to 60 mbar, with a water bath temperature maintained between 45 °C and 50 °C.

**XRD Analysis According to Drying Temperature**

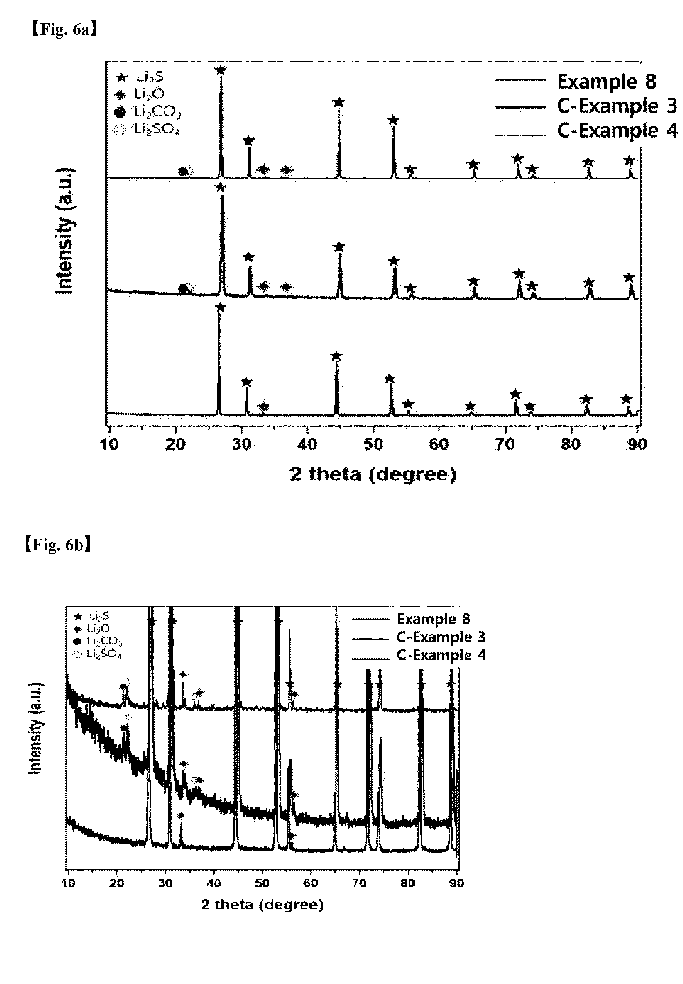

FIGS. 6a and 6b illustrate the XRD peaks of lithium sulfide prepared under different drying temperatures, according to Examples and Comparative Examples of the present invention.

In particular, Example 1 was compared with Example 7 and Comparative Examples 4 and 5, wherein the drying temperatures were adjusted to 110 °C, 170 °C, and 180 °C, respectively, and the XRD peaks of the spray-dried and heat-treated materials were analyzed.

<Example 7> - Low-Concentration, Low-Temperature Spray-Dried Lithium Sulfide

Conducted identically to Example 1, except that the drying temperature was set at 110 °C.

<Comparative Example 4> - Low-Concentration, High-Temperature Spray-Dried Lithium Sulfide

Conducted identically to Example 1, except that the drying temperature was set at 170 °C.

<Comparative Example 5> - Low-Concentration, High-Temperature Spray-Dried Lithium Sulfide

Conducted identically to Example 1, except that the drying temperature was set at 180 °C.

Upon examining Example 7 and Comparative Examples 4 and 5, it was confirmed that when the drying temperature exceeds 170 °C, impurities such as lithium carbonate ($Li_2CO_3$) and lithium sulfate ($Li_2SO_4$) are generated

in addition to lithium sulfide ($Li_2S$), and the oxygen concentration also increases. These results confirm that an appropriate drying temperature range is from 110 °C to 160 °C.

<Example 8> - High-Concentration, High-Temperature Spray-Dried Lithium Sulfide

Conducted identically to Example 1, except that the extraction solution was prepared at a higher concentration (10 g/L).

**XRD Analysis of Heat-Treated Materials from High-Concentration Spray-Dried Material**

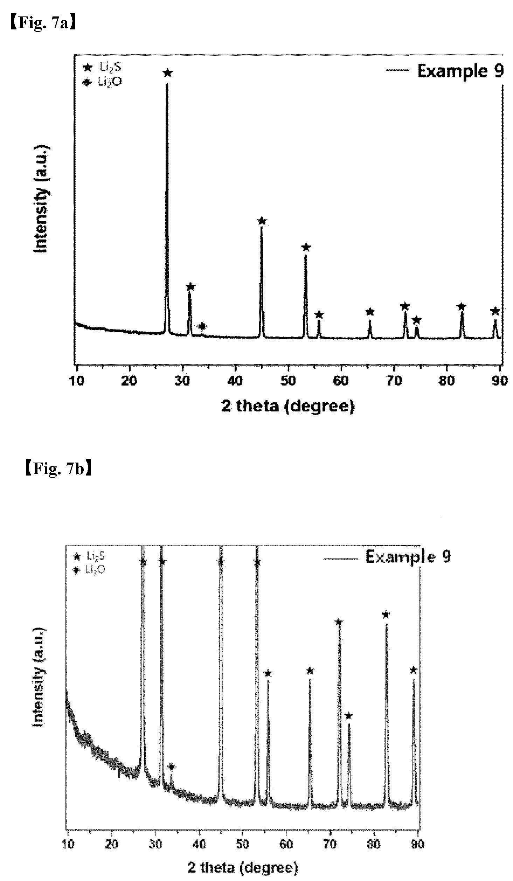

FIGS. 7a and 7b show the XRD peaks of lithium sulfide after heat treatment of spray-dried materials prepared using high-concentration (10 g/L) extract solutions, according to one embodiment of the present invention.

From FIGS. 7a and 7b, it was confirmed that even in the high-lithium-concentration Example 8, only lithium oxide ($Li_2O$) was observed as the impurity peak after final heat treatment.

Table 2 below shows the impurity peaks and oxygen concentrations of the lithium sulfide products produced in the Examples and Comparative Examples of the present invention.

[Table 2]

| | XRD | | | Oxygen Content [%] |
|---|---|---|---|---|
| | $Li_2CO_3$ [%] | Li20 [%] | $Li_2SO_4$ [%] | |
| Ex. 1 | 0.0 | 0.4 | 0.0 | 1.60 |
| Ex.7 | 0.0 | 1.6 | 0.0 | 1.32 |
| Ex.8 | 0.0 | 0.9 | 0.0 | 1.58 |
| C-Ex.1 | 0.0 | 2.8 | 0.0 | 2.80 |
| C-Ex.4 | 1.4 | 1.6 | 2.1 | 5.02 |
| C-Ex.5 | 0.9 | 1.7 | 1.1 | 5.42 |

As shown in Table 2, it was confirmed that when the lithium concentration of the extract filtrate used for drying was within the concentration range of the present invention-specifically, low-concentration extract filtrate (6 g/L; Examples 1 and 7) and high-concentration extract filtrate (10 g/L; Example 8)-spray drying and subsequent heat treatment resulted in the synthesis of lithium sulfide ($Li_2S$) with an oxygen content in the 1 wt% range.

In the case of the examples of the present invention, it was confirmed that, by satisfying the concentration of the extract solution and the heat treatment temperature within the scope of the present invention, lithium sulfide of high purity could be produced, having a $Li_2O$ content of 1.6 wt% or less and a low oxygen content.

The present invention is not limited to the above-described embodiments and/or examples, but may be implemented in various other forms. It will be understood by those skilled in the art that various modifications and other equivalent forms may be made without departing from the spirit or essential characteristics of the invention. Accordingly, the above-described embodiments and/or examples are to be understood in all respects as illustrative and not restrictive.

**Claims**

1. A method for preparing lithium sulfide, comprising:

   mixing a carbon-based material and a lithium compound to form a lithium-carbon composite;
   filtering a solution formed by mixing the lithium-carbon composite with a solvent;
   spray-drying the filtrate at a temperature in the range of 110°C to 160°C under an inert loop structure; and
   heat-treating the spray-dried powder,
   wherein the lithium sulfide produced has an oxygen content of less than 2.8%.

2. The method of claim 1,
   wherein the spray-drying of the filtrate under the inert loop structure at a temperature in the range of 110°C to 160°C includes controlling the average particle diameter of the spray-dried powder to be from 0.1 to 100 $\mu$m.

3. The method of claim 1,
   wherein the spray-drying of the filtrate under the inert loop structure at a temperature in the range of 110°C to 160°C includes controlling the concentration of the extracted solution during spray-drying to be from 5 to 15 g/L.

4. The method of claim 1,
   wherein the spray-drying of the filtrate under the inert loop structure at a temperature in the range of 110°C to 160°C includes forming spherical particles.

5. The method of claim 1,

   wherein in the step of filtering the solution formed by mixing the lithium-carbon composite with a solvent, the weight ratio of the solvent to the lithium-carbon composite is from 1 to 1/4.

6. The method of claim 1,
   wherein the heat treatment of the spray-dried powder is carried out at a temperature in the range of 100°C to 800°C.

7. The method of claim 1,
   wherein the heat treatment of the spray-dried powder generates $H_2S$, $C_3H_8$, or $CH_4$ gas.

8. The method of claim 1,
   wherein the spray-drying of the filtrate under the inert loop structure at a temperature in the range of 110°C to 160°C includes recirculating and re-reacting a portion of the gases generated during drying and inert gas.

9. The method of claim 1,
   wherein the inert loop structure for spray-drying the filtrate at a temperature in the range of 110°C to 160°C includes a partial circulation structure that induces reaction of the gases generated from the spray-dried powder.

10. The method of claim 8,
    wherein the re-reaction reduces impurities according to the following reaction.

$$2H_2S + 2LiOEt \rightarrow Li_2S + 2EtOH$$

11. The method of claim 1,
    wherein the spray-dried powder comprises lithium ethoxide (LiOEt, $C_2H_5OLi$), ethanol (EtOH, $C_2H_5OH$), and lithium bisulfide (LiSH).

12. The method of claim 1,
    wherein the solvent comprises at least one selected from the group consisting of ethanol, methanol, isopropyl alcohol, ethylene glycol, and butyl alcohol.

【Fig. 1a】

【Fig. 1b】

【Fig. 2a】

【Fig. 2b】

【Fig. 2c】

| Minimum: | 0.12um |
|----------|--------|
| Maximum: | 17.82um |
| Mean: | 1.13um |
| Std Dev.: | 1.93um |

【Fig. 2d】

【Fig. 2e】

【Fig. 2f】

【Fig. 2g】

| Minimum: | 1.24um |
|---|---|
| Maximum: | 66.84um |
| Mean: | 8.65um |
| Std Dev.: | 9.2um |

【Fig. 2h】

【Fig. 2i】

【Fig. 2j】

【Fig. 2k】

| Minimum: | 1.75um |
|----------|--------|
| Maximum: | 224.59um |
| Mean: | 5.42um |
| Std Dev.: | 12.43um |

【Fig. 3】

【Fig. 4a】

【Fig. 4b】

【Fig. 4c】

【Fig. 4d】

【Fig. 4e】

【Fig. 4f】

【Fig. 5a】

○ Re-reaction of H2S gas using an inert loop

$$LiSH + LiOEt \rightarrow Li_2S + EtOH \quad \text{[Reaction 1]}$$

[Reaction 3]

$$2LiOEt + 2H_2S \rightarrow Li_2S + 2EtOH$$

Inert Loop

【Fig. 5b】

○ H2S gas release structure without an inert loop

[Reaction 1]

$$LiSH + LiOEt \rightarrow Li_2S + EtOH$$

[Reaction 2]

【Fig. 6a】

【Fig. 6b】

【Fig. 7a】

【Fig. 7b】

## INTERNATIONAL SEARCH REPORT

| International application No. |
|---|
| **PCT/KR2023/020536** |

| A. | CLASSIFICATION OF SUBJECT MATTER |
|---|---|

**C01B 17/22**(2006.01)i

According to International Patent Classification (IPC) or to both national classification and IPC

| B. | FIELDS SEARCHED |
|---|---|

Minimum documentation searched (classification system followed by classification symbols)

C01B 17/22(2006.01); A61K 38/26(2006.01); A61K 9/14(2006.01); C01B 17/26(2006.01); C01B 17/36(2006.01); H01M 10/0562(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 황화 리튬(lithium sulfate, Li2S), 산소(oxygen), 분무 건조(spray drying), 비활성 루프(inert loop), 용매(solvent)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111908431 A (TIANJIN UNIVERSITY OF TECHNOLOGY) 10 November 2020 (2020-11-10)<br>See paragraphs [0004]-[0029]; claims 1-4; example 2; and table 1. | 1-7,12 |
| A | | 8-11 |
| Y | JP 2022-514893 A (NOVO NORDISK A/S) 16 February 2022 (2022-02-16)<br>See paragraph [0036]. | 1-7,12 |
| Y | CN 112678780 A (TIANQI LITHIUM (JIANGSU) CO., LTD.) 20 April 2021 (2021-04-20)<br>See paragraphs [0022]-[0086]; and claims 1-10. | 4 |
| A | KR 10-2022-0161749 A (IUCF-HYU (INDUSTRY-UNIVERSITY COOPERATION FOUNDATION HANYANG UNIVERSITY)) 07 December 2022 (2022-12-07)<br>See entire document. | 1-12 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 March 2024** | **22 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/020536** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0108933 A (SOLID IONICS) 04 August 2022 (2022-08-04)<br>See entire document. | 1-12 |

Form PCT/ISA/210 (second sheet) (July 2022)

## INTERNATIONAL SEARCH REPORT
### Information on patent family members

International application No.

**PCT/KR2023/020536**

| Patent document cited in search report | | | Publication date (day/month/year) | Patent family member(s) | | | Publication date (day/month/year) |
|---|---|---|---|---|---|---|---|
| CN | 111908431 | A | 10 November 2020 | None | | | |
| JP | 2022-514893 | A | 16 February 2022 | CN | 113194929 | A | 30 July 2021 |
| | | | | CN | 113194929 | B | 09 December 2022 |
| | | | | EP | 3897582 | A1 | 27 October 2021 |
| | | | | JP | 7410952 | B2 | 10 January 2024 |
| | | | | MA | 54510 | A | 30 March 2022 |
| | | | | US | 11617965 | B2 | 04 April 2023 |
| | | | | US | 2022-0088500 | A1 | 24 March 2022 |
| | | | | WO | 2020-127950 | A1 | 25 June 2020 |
| CN | 112678780 | A | 20 April 2021 | CN | 112678780 | B | 03 February 2023 |
| KR | 10-2022-0161749 | A | 07 December 2022 | None | | | |
| KR | 10-2022-0108933 | A | 04 August 2022 | KR | 10-2580338 | B1 | 20 September 2023 |

Form PCT/ISA/210 (patent family annex) (July 2022)